# EUROPEAN PATENT APPLICATION

(11) **EP 2 955 928 A1**
(43) Date of publication of application: **16.12.2015**
(21) Application number: 14172099.5
(22) Date of filing: 12.06.2014
(51) Int. Cl.: H04N 21/442, H04N 21/475, G06F 17/30

(54) **Method for timely correlating a voting information with a TV program**

(71) Applicant: Vodafone GmbH, 40549 Düsseldorf (DE)
(72) Inventor: Schneyder, Nathalia, 40597 Düsseldorf (DE)
(74) Representative: Kuhlmann, Kai

(57) **Abstract**

The invention is related to a method for timely correlating a voting information (10) with a TV program (20), comprising the following steps:
- Receiving the voting information (10) from the user on a mobile device (110),
- Transmitting the received voting information (10) to a communication server (120) in a communication network (100),
- Correlating a voting time (12) of the voting information (10) with a program time (22) of the TV program (20) to a voting data (30) by using a time delay (32) between the voting time (12) and the program time (22),
- Transmitting the voting data (30) to a data usage server (140).

## Description

The present invention is related to a method for timely correlating a voting information with a TV program, a computer program product being stored on a computer readable medium for timely correlating a voting information with a TV program as well as a communication network.

Voting for TV programs is generally a known state of the art. For example, it is possible that a Smart TV is able to receive a voting information from the user of the Smart TV to provide an interaction with a TV show. For example, a voting action can be carried out to decide between different candidates of persons participating within the TV show. This leads to a possibility of an interaction communication between the user of the Smart TV and thereby the consumer of the TV show on one side and the producer of the TV show, namely the TV network, on the other side. However, the voting interaction is only possible with respect to so-called Smart TVs. Moreover, the voting action is focused only on the correlation of specific networks, specific TV shows and the use of specific devices. A combination of different devices, namely a smartphone, a tablet PC, a laptop and a TV is not able to be used for open voting on a TV show.

Shifting the voting step from a Smart TV to another device, for example, a mobile telephone or a laptop or a tablet PC is not possible according to the technical solutions already known. In particular, there happen to be different time delays between the time of the TV program, namely the product program time on one side and the time at which the viewer, respectively the consumer of the TV show, watches the TV show. For example, the time for transferring a TV show from the TV network to the respective device for watching the TV show depends on the source of the TV program. For example, the streaming of digital content of a TV show on a tablet PC takes a longer time and therefore produces a longer time delay compared to digital TV show on a Smart TV device. This leads to a situation wherein a user of a smart device like a mobile telephone, who wants to provide a voting information for the TV show he is watching at a very moment, is not able to be correlated precisely to the respective TV program.

Based on aforesaid information it is one aspect of the present invention to solve at least some of the discussed disadvantages. In particular, it is one aspect of the present invention to provide an easy and cost-efficient way for open and in particular unidirectional voting possibility on different mobile devices.

Aforesaid problems are solved by a method according to independent claim 1, a computer program product according to independent claim 12 as well as a communication network according to independent claim 13. Further features and details of the invention result from the subclaims, the description and the drawings. Thereby, the features and details discussed with respect to the method are of course also correlated to the respective computer program product as well as the respective communication network and the other way around.

According to the present invention, a method for timely correlating a voting information with a TV program is provided, comprising the following steps:
- Receiving the voting information from the user on a mobile device,
- transmitting the received voting information to a communication server in a communication network,
- correlating a voting time of the voting information with a program time of the TV program to a voting data by using a time delay between the voting time and the program time,
- transmitting the voting data to a data usage server.

Based on the present invention, it is possible to receive the voting information from the user on a mobile device. The mobile device can, for example, be a mobile telephone, a tablet PC or a laptop PC. Of course, also other kind of devices, for example, wearable mobile devices such as smartglasses or smartwatches can also be considered as a mobile device according to the present invention. To receive the voting information, the user of the mobile device creates an input information of the voting information. The present invention is mainly discussed with respect to a mobile device in a form of a mobile telephone. Of course, the discussed solutions according to the mobile telephone can in a respective manner also be carried out with different technical solutions as to the mobile device.

The user of the mobile device watches a TV program on a separate device, for example, streaming on his laptop PC or watching the TV program on his Smart TV. By using for example a computer program product like a downloadable and installed app on the mobile telephone the user gives information about his voting into the mobile device, for example, provides a click or a touch with the finger on a respective voting icon on the display device of the mobile device. This voting information can, for example, comprise a content of a quality information according to the user. The user can vote the present TV program, for example, as good, bad or neutral. This information is at least a part of the inventive voting information, which is received from the user.

After the voting information has been received from the user, this is transmitted to a communication server in a communication network. For example, such a communication network can be a wireless communication network. Wireless communication networks can be single or multiple complex communication networks. For example, the user sitting at home using his mobile device like a mobile telephone uses his home wireless LAN network to transmit the received voting information to his modem. From the modem the voting information is carried on within the communication network through respective glass fiber cables. An alternative is also, if the user is travelling and gets information about a TV program during his travel, for example, at a television in a public place like a train station or an airport, he can use the wireless 3G or UMTS or the like network for his mobile telephone as the mobile device to transmit the received voting information to the communication server. The communication server is in particular presented by the provider of the communication network or a part of the provider of the communication network.

One key step of the present invention is carried out in particular at least partly within the communication server. This key step comprises the correlation of a voting time of the voting information with a program time of the TV program to a voting data. This is done by using a time delay between the voting time and the program time. According to the present invention, the voting time has to be understood as the specific point of time at which the user creates the voting information and clicks within his mobile device. This is the specific point in time of receiving the voting information. Thereby, the voting time can, for example, be an absolute point of time compared to the network time of the communication network. On the other way, the program time of the TV program can also be defined as an absolute point of time within the network time of the communication network. As it has already been discussed in detail within the introductory part of this application, there is always a time delay between the time of sending or presenting the TV show from the network (the TV network) on one side and receiving the respective TV show on different devices. In particular this time delay is depending from the point of the mobile device, the sort or the kind of the mobile device as well as the source of the TV show.

The correlating step according to the present invention is now able to overcome this disadvantage of the time delay. In other words, the correlation step deletes the time delay problem by correlating the voting time and the program time to the voting data. This leads to the situation that within the communication server a correlated voting information with a respective TV program in a timely manner is presented. In other words, the voting data comprises specific information of a correlation of the specific point of time within the TV show to which the voting information has been received respectively belongs to. This correlates and thereby deletes the time shift between the program time and the voting time.

After that key step of the present invention has been carried out, the voting data is transmitted to a data usage server. A data usage server can for example be part of the communication network to combine the voting data with further voting data information. This leads to a combined information set which can, for example, be presented to the TV network to optimize their TV shows. The data usage server can, for example, also be part of the TV network such that now a direct communication within the TV show is possible.

As it can be derived from above, the inventive method can be used either for general voting possibilities for TV shows or TV advertisements running on TV networks. The present invention also can be used for communication and interaction of the TV shows with the viewers all around the network world.

It is possible according to the present invention that a method is characterized in that the voting time is provided by the communication server as the receiving time of the voting information of the communication server. As it can be derived from the discussion as to claim 1 of the present invention, the point of time of the voting time and the program time is crucial to carry out the inventive method. The voting time can, for example, according to this aspect of the invention be defined by the receiving time of the voting information of the communication server. The communication server usually comprises specific information as to the absolute time of the communication network. The point of time at which the voting information is received by the communication server can lead to the specific definition of the voting time. This leads to a little time delay between the specific moment in time at which the voting information is received by the user and the receiving point of time at the communication server. Of course, it is possible that the receiving time is correlated with a specific and predefined time delay for the transmission time between the mobile device on one hand and the communication server on the other hand. The communication server can comprise clock means to check the receiving time and to set the receiving time as the voting time.

It is also possible that according to the present invention the method is characterized in that the voting time is provided by the mobile device in form of an input time at the mobile device. For that aspect of the present invention, the mobile device can comprise also clock means for providing the network time at the mobile device. Thereby, a time shift for the transmission and the respective time delay do not has to be considered any further. Therefore, the voting information can comprise the voting time in form of a time tag and thereby, the voting time can be transmitted together with the voting information to the communication server. This is even more specific to create a specific correlation within the communication server by correlating the voting time with the program time.

A further aspect of the present invention leads to a method which is characterized in that the voting information comprises a user specific quality information related to the TV program and at least one of the following additional information parts:
- Viewed network
- Source of the TV program
- User specific personal data

Of course, the aforesaid list is a non-final list. The user specific quality information in particular comprises information on the viewed network, namely the TV network, which is the basis for the voting information. One further additional information part can comprise the source of the TV program, for example, if the TV program is streamed on a mobile device or if the TV program and the respective show is watched on a Smart TV. The source of the TV program can lead to further information which can be used within the correlating step in particular as to the time delay between the voting time and the program time. User-specific personal data leads to the possibility for further usage in particular with respect to further details as to the use of the voting data within the communication network. User-specific personal data can for example comprise the name, the address or further meta data of the respective user. This can also comprise the location of the mobile device, which has been used to carry out at least partly the inventive method. Additional data can be the result of an active input of the user as well as can be part of an automatic or semi-automatic collection as a part of the present inventive method.

It is also possible that according to the present invention the method is characterized in that the correlating step of the voting time and the program time comprises a functional relationship with a source of the TV program for the time delay. A functional relationship can for example be an easy mathematical relationship, for example, a predefined time delay which is used to calculate and carry out a correlation step of the present invention. A functional relationship is, for example, a list of different sources of TV programs which can be basis of predefined time delays respective to the respective source of the TV program. For example, a time delay in a predefined manner of a first value can be set for the first source of the TV program, for example, a streaming source. A second source of the streaming program, for example, a digital source of Smart TV can comprise a second and, for example, different value for the time delay for that second source.

It is also possible that according to the present invention the method is characterized in that a registration step is carried out before the first receiving step of the voting information, such registration step stores at least one of the following additional information parts at the mobile device:
- Source of the TV program
- IP address of the user
- Telephone number of the user
- Identification number of the user

Aforesaid list is a non-final list. The mobile device can comprise data storage means, for example, like a SIM-card or a preinstalled data storage at the mobile device to save the respective information. Of course, the additional information parts can be actively input by the user or automatically or semi-automatically be collected by the inventive method. At least parts of these additional information parts can be transmitted together with the voting information to the communication server, thereby leading to a further specific information to be used by the user of the overall data and in particular by the respective TV networks.

It is further possible that according to the present invention the method is characterized in that for provision of an additional information part of the voting information comprising the viewed network, at least one of the following steps is carried out:
- Manual input of the viewed network by the user
- Automatic recognition of the viewed network by recording and comparing audio information and/or video information with the mobile device

The aforesaid list is a non-final list. For example, the computer program product in form of an app on a mobile device can comprise the possibility to manually input the viewed network by the user. The TV network and in particular also a part of the TV show can be part of the input by the user and therefore can take place as additional information parts in the present invention. Also it is possible that an automatic recognition of the viewed network is carried out. For example, a mobile device like a mobile telephone comprises video recognition or audio recognition systems. With a microphone or with a camera of the mobile device it is possible to record parts of the TV program and thereby carry out a recognition step which automatically defines the viewed TV network. This automatic recognition can, for example, be part of the inventive method to increase the safety and decrease the complexity of the whole method.

It is further of advantage that according to the present invention the method is characterized in that the time delay is at least partly provided by the communication server in form of predefined values for each network and/or each source. A predefinition can for example be provided by a list of network sources or TV networks, which are automatically predefined correlated to the time delay. For example, for every specific source a specific time delay can be stored in such a list. It is also possible that different time delays correlate with different TV networks. An adaptation of predefined values is of course possible so that the predefined time delays can be part of a variation over the time of usage. Thereby, it is a fast and therefore a very efficient and less complex way to carry out the inventive method by reducing the use of the time delay in form of predefined specific values.

It is also possible that according to the present invention the method is characterized in that the time delay is at least partly provided by the communication server in form of a continued measurement of the time delay of each network. This leads to a little bit more complex situation of the method but, however, increase this exactness of the inventive method. In particular, all networks can be viewed by the communication network at the communication server parallel including different kind of sources. Therefore, it is possible for the communication server to have a specific overview of the exact and in real time existing time delay for each TV network and each source for the TV network. This leads to a basis for the time delay which correlates in a very specific and direct manner to the realistic time delay in the field at the TV program and the respective source for the user. In other words, the communication server is able to watch all TV networks over all possible sources in a parallel way to allow the continued measurement of the time delay.

It is further possible that according to the present invention the method is characterized in that the voting information comprises a predefined scale of quality steps. The voting information can, for example, comprise three, four or five or even more quality steps in particular uneven number of quality steps. For example, comprising three quality steps the voting information can comprise the predefined scale of good, neutral or bad. Even more specific and more detailed defined quality steps can be part of the voting information. This leads to a specific voting interface which can be used later on by using the overall data at the data usage server. The voting itself is thereby fitted into an easy and less complex, in particular simple system, which is easy to handle within the communication server as well as within the mobile device.

It is further possible that according to the present invention the method is characterized in that it is carried out for multiple users, whereby the voting data from different users for the identical TV program is combined for transmitting the data to the data usage server. This is the possibility if a huge number of multiple users are watching the respective TV program. Timely correlated with each other, the multiple users all provide respective voting information and thereby, a huge number of information data can be received by the communication server. The data usage server can, for example, be an external server in particular at the TV network to get the respective huge amount of data and to use that information for optimization of the TV program or the respective TV show. The first step of the evaluation of the voting information respectively the voting data therefore is already carried out by the communication in the communication server.

A further aspect of the present invention is characterized by a computer program product being stored on a computer readable medium for timely correlating a voting information with a TV program, comprising the following:
- Computer readable program means, initiating the computer to receive the voting information from the user on a mobile device,
- Computer readable program means, initiating the computer to transmit the received voting information to a communication server in a communication network,
- Computer readable program means, initiating the computer to correlate a voting time of the voting information with a program time of the TV program to a voting data by using a time delay between the voting time and the program time,
- Computer readable program means, initiating the computer to transmit the voting data to a data usage server.

By the use of the specific steps according to the inventive method, the inventive computer program product comes with the same advantages, which have already been discussed in detail with respect to the inventive method.

It is further a possibility according to the present invention to provide a communication network comprising a communication server as well as a control unit configured to carry out a method according to the present invention. Thereby, also the inventive communication network leads to the same advantages, which have been discussed in detail with respect to the inventive method.

Further details of the present invention are discussed with respect to the following description of the drawings, whereas the drawings only disclose examples according to the present invention. The figures show schematically:
- Fig. 1: a first overview of the situation for an inventive method,
- Fig. 2: a possible application design on the display device of a mobile device,
- Fig. 3: a schematic overview of the time shift between the TV device and the respective network and
- Fig. 4: one possibility for the structure of voting data.

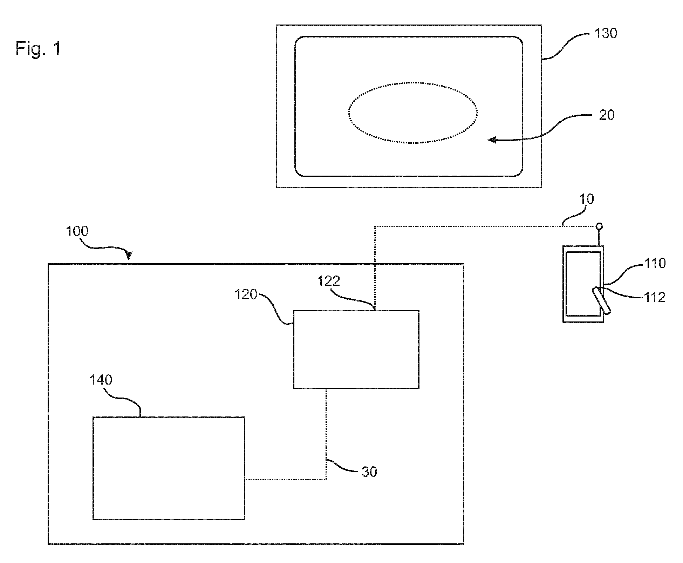

In fig. 1, the possibility of the use of an inventive method is disclosed. For example, on a TV device 130 like a Smart TV a TV program 20 is displayed. The user can watch this TV program on the screen of the TV device 130.

After having found the respective TV program 20 and decided on the respective voting information the user uses his mobile device 110, for example, a mobile telephone, to input the respective voting information 10. This takes place at the input time 112 on the respective mobile device 110. The voting information 10 is transmitted to a communication network 100 and within that communication network 100 to a communication server 120. The time at which the voting information is received by the communication server can be specified as the receiving time 122. After carrying out the respective correlating step within the communication server, a further transmission can take place. For example, the respective voting data 30, which is the result of the correlation step within the communication server 120, is transmitted to a data usage server 140, which can take part of the communication network 100 or which is possibly a part of a respective external TV network.

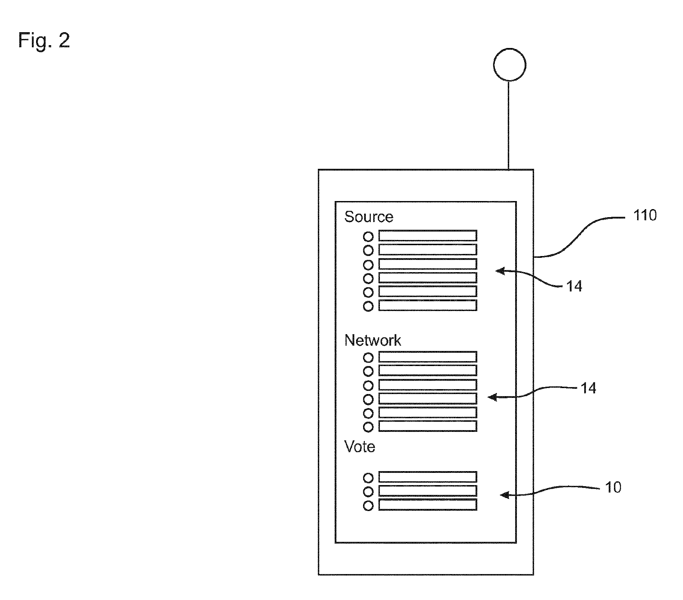

In fig. 2, a first aspect of a computer program product carrying out the inventive method is disclosed. In particular, on the display device of the mobile device 110 some specific information is disclosed. In a first part of the display device of the mobile device 110 a source can be selected as an additional information part 14. In a second part of the display device of the mobile device 110 the respective viewed network can be selected as an additional information part 14. At the last as core information, a voting information 10 can be selected in this case by three different predefined quality scale steps.

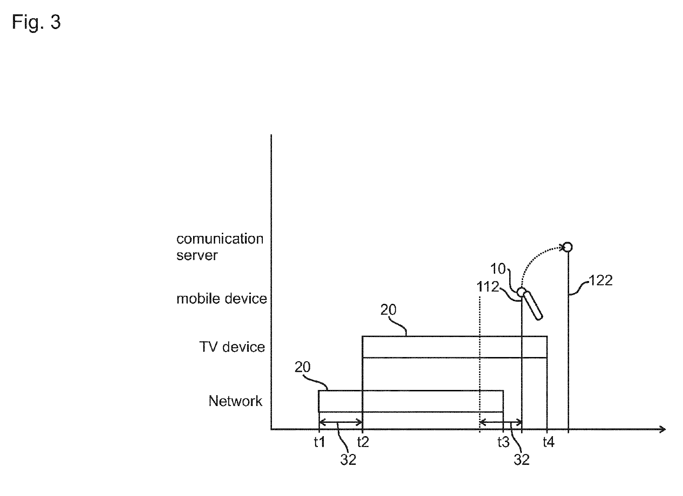

In fig. 3, one of the key issues of the present invention is depicted. In this case, the time delay 32 between the sending time of the TV program 20 from the network is compared to the viewing time of the TV device of the TV program 20. At t1, the TV program 20 starts. The network stops the transmission of the TV program 20 at t3.

By receiving the TV device 20, some time has elapsed between the start of the TV program 20 at t1 and the start of receiving the TV program 20 at t2 at the TV device. In the same manner, the whole TV program 20 is delayed by the time delay 32 between the sending from the network and the receiving at the TV device.

As it can be seen also in fig. 3, the point of time at which the user creates the voting information 10, namely at the input time 112, is to be correlated with the respective TV program 20 at the specific situation, respectively point of time. The time between the network time and the TV device time is once more the time delay 32. It is also depicted in fig. 3 that during transmission of the voting information 10 to the communication server 120 even more time elapses. Therefore, the receiving time 122 is even more later than the input time 112.

By correlating now the voting time 12 with the program time 22, according to the present invention a correlation can be produced forming the voting data 30.

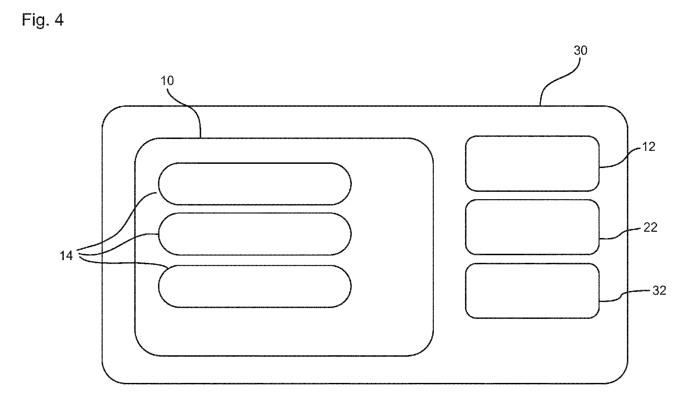

In fig. 4, one schematic overview of the voting data 30 is depicted. The voting data 30 comprises in general the voting information 10, in particular also additional information parts 14. Moreover, some information on the voting time, the program time 22 as well as the time delay 32 can be part of the voting data 30.

Aforesaid description of the drawings describes the present invention only by the way of examples. Therefore, parts of the description of the drawings can be part of the present invention without limiting the scope.

### REFERENCE SIGNS

- 10: voting information
- 12: voting time
- 14: additional information part
- 16: predefined scale
- 20: TV program
- 22: program time
- 30: voting data
- 32: time delay

- 100: communication network
- 110: mobile device
- 112: input time
- 120: communication server
- 122: receiving time
- 130: TV device
- 140: data usage server

## Claims

1. Method for timely correlating a voting information (10) with a TV program (20), comprising the following steps:
- Receiving the voting information (10) from the user on a mobile device (110),
- Transmitting the received voting information (10) to a communication server (120) in a communication network (100),
- Correlating a voting time (12) of the voting information (10) with a program time (22) of the TV program (20) to a voting data (30) by using a time delay (32) between the voting time (12) and the program time (22),
- Transmitting the voting data (30) to a data usage server (140).

2. Method according to claim 1, **characterized in that** the voting time (12) is provided by the communication server (120) as the receiving time (122) of the voting information (10) at the communication server (120).

3. Method according to any of the preceding claims, **characterized in that** the voting time (12) is provided by the mobile device (110) in form of an input time (112) at the mobile device (110).

4. Method according to any of the preceding claims, **characterized in that** the voting information (10) comprises a user specific quality information related to the TV program (20) and at least one of the following additional information parts (14):
- Viewed network
- Source of the TV program
- User specific personal data

5. Method according to claim 5, **characterized in that** the correlating step of the voting time (12) and the program time (22) comprises a functional relationship with the source of the TV program (20) for the time delay (32).

6. Method according to any of the preceding claims, **characterized in that** a registration step is carried out before the first receiving step of the voting information (10), such registration step stores at least one of the following additional information parts (14) at the mobile device (110):
- Source of the TV program (20)
- IP address of the user
- Telephone number of the user
- Identification number of the user

7. Method according to any of the preceding claims, **characterized in that** for provision of an additional information part (14) of the voting information (10) comprising the viewed network, at least one of the following steps is carried out:
- Manual input of the viewed network by the user
- Automatic recognition of the viewed network by recording and comparing audio information and/or video information with the mobile device (110)

8. Method according to any of the preceding claims, **characterized in that** the time delay (32) is at least partly provided by the communication server (120) in form of predefined values for each network and/or each source.

9. Method according to any of the preceding claims, **characterized in that** the time delay (32) is at least partly provided by the communication server (120) in form of a continued measurement of the time delay (32) of each network.

10. Method according to any of the preceding claims, **characterized in that** the voting information (10) comprises a predefined scale (16) of quality steps.

11. Method according to any of the preceding claims, **characterized in that** it is carried out for multiple users, whereby the voting data (30) from different users for the identical TV program (20) is combined for transmitting to the data usage server (140).

12. Computer program product being stored on a computer readable medium for timely correlating a voting information (10) with a TV program (20), comprising the following:
- Computer readable program means, initiating the computer to receive the voting information (10) from the user on a mobile device (110),
- Computer readable program means, initiating the computer to transmit the received voting information (10) to a communication server (120) in a communication network (100),
- Computer readable program means, initiating the computer to correlate a voting time (12) of the voting information (10) with a program time (22) of the TV program (20) to a voting data (30) by using a time delay (32) between the voting time (12) and the program time (22),
- Computer readable program means, initiating the computer to transmit the voting data (30) to a data usage server (140).

13. Communication Network (100) comprising a communication server (120) as well as a control unit configured to carry out a method according to any of claims 1 to 11.
